# EUROPEAN PATENT SPECIFICATION

(11) **EP 2 919 298 B1**
(45) Date of publication and mention of the grant of the patent: **23.08.2017**
(21) Application number: 14159259.2
(22) Date of filing: 12.03.2014
(51) Int. Cl.: H01M 4/04, H01M 4/133, H01M 4/134, H01M 4/136, H01M 4/1393, H01M 4/1395, H01M 4/36, H01M 4/38, H01M 4/88, C04B 35/622, C04B 35/626, C04B 35/628, H01M 10/0525

(54) **Si/C composite anodes for lithium-ion batteries with a sustained high capacity per unit area**
Si/C-Kompositanoden für Lithium-Ionen-Batterien mit anhaltender hoher Kapazität pro Flächeneinheit
Anodes composites Si/C pour batteries lithium-ion avec une capacité élevée prolongée par unité de surface

(43) Date of publication of application: 16.09.2015
(73) Proprietor: Belenos Clean Power Holding AG, 2502 Bienne (CH)
(72) Inventor: Gonzalez, José-Antonio, 1007 Lausanne (CH)
(74) Representative: Giraud, Eric

(56) References cited:
- WO-A2-2010/029135
- WO-A2-2011/056847
- US-A1- 2009 208 844

## Description

### Technical Field

The present invention regards a silicon and carbon related material suitable for use as anode in rechargeable batteries, in particular lithium-ion batteries.

### Background Art

Graphite, with a theoretical capacity of 372 mAh/g, is the standard anode active material (AM) in rechargeable Li-ion batteries. The maximum load of AM that an anode can stand without compromising the mechanical stability and performance of the anode is very important, since it determines the capacity per unit area of the anode. For instance, commercial graphite anodes with a load of approx. 7 mg/cm² offer a maximum capacity per unit area of approx. 2.5 mAh/cm². Therefore, to improve this, AM with higher specific capacities or deposition methods to achieve stable thicker films are required. Beside capacity per unit area, the capacity retention and the C-rates (charge/discharge current) are the other two important factors to take in account when studying cathodes or anodes for lithium-ion batteries. It is also important to point out that electrodes are usually prepared by combination of AM with additives to provide good mechanical stability and good electronic conductivity. The additives should be chosen so that they allow large scale manufacturing and provide good electrochemical performance.

The most promising replacement of graphite seems to be silicon because, theoretically, until 4.4 equivalents of Li can be alloyed per equivalent of crystalline Si, to form Li_{4.4}Si (3'500 mAh/g). Additionally, silicon is cheap because it is highly abundant on earth. However, crystalline Si has a major disadvantage: the volume per silicon atom for Li₂₂Si₅ alloy is four times higher than that of the parent silicon atom and thus, there is a large volume expansion during lithiation. This induces mechanical stress leading to a fracture of the anode and loss of electronic percolation. Additionally, due to this cracking, new surface of Si is exposed to the electrolyte solvents, which leads to an additional deposition of insulating layers degrading the capacity retention. Because of all these effects, silicon anodes have a very poor cycling performance and as consequence, only few companies claim the use of silicon as anode. Within the vast literature on Si anodes, many examples of silicon anodes with higher specific capacities can be found, however, except for WO 2011/056847 discussed further on, these documents (to the inventor's knowledge) all either concern thin layer electrodes with loads <1 mg/cm², or provide no indication of the load.

The high capacity silicon anode claimed in WO 2011/056847 with a capacity per unit area of <3.5 mAh/cm² is disclosed to be achieved thanks to a silicon anode composite with a specific capacity of 1500 mAh/g and loads between 1-5 mg/cm². However, detailed study of this patent application reveals a very poor capacity retention of the claimed silicon/anode. It can be seen in Figure 7 and Table II of WO 2011/056847 (shown herein as Fig.2) that even for a thin 18 µm anode offering only 1.32 mAh/cm² the capacity drastically decreases within the first 5 cycles, and this even when a low current is used (C/20 for the 1^{st} and 2^{nd} cycle, C/10 for the 3^{rd} and 4^{th} cycle and C/5 for the 5^{th} cycle). Thus, according to WO 2011/056847, "high" capacity per unit area was only obtainable for the first few cycles but could not be sustained upon continuous charging and discharging.

Therefore it was a goal of the present invention to provide anode materials with good capacity per unit area that could be conserved over at least 30 continuous charging and discharging cycles, preferably at least 50 continuous charging and discharging cycles.

The present invention thus describes the preparation and use of specific silicon and carbon related material as anodes in rechargeable batteries in particular lithium-ion batteries.

### Disclosure of the Invention

Hence, it is a general object of the invention to provide a method for producing a silicon based electroactive anode material (AM) capable to alloy lithi-It is another object of the present invention to provide an electroactive anode material obtainable by the method of the present invention as described above and in the detailed description below.

It is a further object of the present invention to provide silicon based electroactive anode material wherein said material comprises silicon particles with a particle size in the micrometer range, said particles being covered by flakes of carbonaceous material. The particles are of the following particle size distribution:

| | | |
|---|---|---|
| Diameter at 10 % | : | ≤ 1 µm |
| Diameter at 50 % | : | ≤ 5 µm |
| Diameter at 90 % | : | ≤ 15 µm |
| Mean diameter | : | 3 to 6 µm |

preferred:

| | | |
|---|---|---|
| Diameter at 10 % | : | ≤ 0.6 µm |
| Diameter at 50 % | : | ≤ 4.0 µm |
| Diameter at 90 % | : | ≤ 11.0 µm |
| Mean diameter | : | 3.5 to 5.0 µm |

More preferred:

| | | |
|---|---|---|
| Diameter at 10 % | : | 0.45 ± 0.05 µm |
| Diameter at 50 % | : | 3.0 ± 0.2 µm |
| Diameter at 90 % | : | 10.0 ± 0.5 µm |
| Mean diameter | : | 4.0 to 4.5 µm |

Further objects of the present invention are a method for producing anodes by combining an AM of the present invention with a polymer binder and electrically conducting additives, an anode obtainable by said method and a battery comprising such an anode.

Now, in order to implement these and still further objects of the invention, which will become more readily apparent as the description proceeds, the method for producing a silicon carbon composite electroactive anode material (AM) capable to alloy lithium is manifested by the features that
micro sized silicon powder is mixed with micro sized organic polymer powder to produce a silicon-polymer-mixture,
the silicon-polymer mixture in inert gas is heated to pyrolysis temperature and kept there for a time sufficiently long to pyrolyze the organic polymer and to form a pyrolyzed polymer coated silicon,
said pyrolyzed polymer coated silicon is then milled in inert gas to form the silicon carbon composite electroactive anode material (AM).

The silicon carbon composite electroactive anode material (AM) is composed of smaller particles than those of the micro sized silicon powder and said AM particles are at least partially covered with possibly aggregated flakes of pyrolyzed polymer (carbonaceous material).

In general, micro sized silicon powder means a silicon powder with a particle size in the range of 5 to 80 µm, in general 5 to 50 µm, preferably 10 to 40 µm (e.g. Aldrich, 325 mesh)

Micro sized organic polymer powder means a polymer powder with a mean particle size that does not exceed 200 µm, preferably with a mean particle size not exceeding 100 µm, and much preferred a polymer powder with at least 90% of the particles having a particle size not exceeding 100 µm.

Preferably the ratio of silicon to organic polymer is from 1 : 2 to 1 : 3 such as 1 : 2 to 3 : 8 or about 3 : 7.

A presently preferred organic polymer is PVC, in particular PVC with an average M_{W} of about 43,000 and an average Mₙ of about 22,000 (obtainable from Sigma-Aldrich, product no. 389293). Other thermoplastic polymers that pyrolyze at temperatures of not more than 900°C preferably not more than 850°C and that result in almost pure carbon, e.g. 97% pure carbon or 98% pure carbon or 99 % pure carbon or >99% pure carbon, can be used.

A suitable inert gas is argon. The polymer, e.g. PVC and the silicon can be mixed under usual room atmosphere conditions and transferred to the oven. Before starting the pyrolysis reaction, the oven is purged with inert gas, like an argon flow. This flow is kept until the powders are removed from the oven.

Since silicon in general contains a native silica layer, some oxygen is likely to be present during the pyrolysis reaction. However, this amount (the inventor expects 0-1.5% oxygen referred to the silica comprising silicon, and not more than 3 % in the final product) so far did not prevent the formation of an acceptable product. Nevertheless, the additional presence of oxygen, i.e. in excess to the native silica layer - according to present knowledge - should be avoided.

The suitable pyrolysis temperature depends from the polymer. For PVC it is above about 800°C such as 830°C. The heating speed should not be too fast or stopped at a suitable temperature for an adequate time in order to allow the polymer to melt and form a film over the silicon particles prior to pyrolysis. Pyrolysis should be performed long enough to ensure that all polymer is pyrolyzed, e.g. for 0.5 to 2 h dependent on the cooling speed. For PVC 1 to 2 hours at 820 to 850°C such as 830°C turned out to be suitable or a temperature profile with e.g. 1 hour at 830°C followed by slow cooling. In a preferred embodiment, the pyrolysis reaction, e.g. using PVC as carbon source, is performed with a temperature profile as follows:
Removal of adsorbed water: Heating to about 100°C and keeping this temperature for about 15 min.
Annealing: Heating to a temperature where the carbon source is molten but does not yet decompose such as about 300°C for PVC and keeping this temperature for about 30 min.
Pyrolysis: heating to a temperature where pyrolysis takes place such as above 800°C, like 830°C, for PVC and keeping this temperature for about one hour.
Heating speed: 4 to 7°C/min.
Cooling speed: 1-2°C

The milling step suitably is performed in inert gas like argon and may be performed using a ball mill, preferably a high energy ball mill with a weight ratio balls/powder of 15:1 to 30:1, preferably 20 : 1, at a rotational speed of 800 to 1200 rpm for 15 min. to 4 hours, such as about 1000 rpm for about 20 min., with temperature control set to about 25°C. The milling conditions are dependent on the rotational speed and the ratio balls/powder, the time and the temperature, i.e. if the rotational speed is outside the above-indicated range the ratio balls/powder and the time have to be adjusted and possibly the temperature controlled.

The present invention also provides an electroactive material (AM) that is a silicon/carbon composite obtainable from micro size silicon particles that are covered with smaller carbonaceous fragments or flakes that may or may not be aggregated and that are the result of the thermal decomposition of a polymer and a mechanical milling process.

A preparation method for the production of anodes based on the Si/C composite is also provided. Indeed, to avoid the cracking and disintegration of the silicon anodes, the AM is advantageously mixed with additives in order to obtain a host matrix that can accommodate the silicon volume expansion. Electronic conductivity is also required within the electrode. For these reasons, polymer binders and electrically conductive carbon or graphite are preferably mixed with the AM and solvents, preferably water, to form a slurry that can afterwards be casted on metal foils (current collectors) and dried. The optimization of the AM/additives-ratio and the nature of the additives can improve the performance of the anode. A preferred production method comprises the choice and ratio(s) of additives in order to improve the capacity per unit area. This is likely to be important in order to arrive at the continuously higher capacity per unit area demand required for commercial lithium ion batteries minimizing the "dead weight" of the battery (casing, current collector, etc.). The optimal composition can be determined by means of standard procedures, i.e. by varying one or more of the additives and/or its/their amount and determining the features of a so produced electrode.

Suitable polymer binders have good solubility, preferably in water, as well as some elasticity and stability, e.g. an elongation at break of at least about 25% and a tensile strength of at least about 10 MPa. Such polymer binders are e.g. carbon methyl cellulose (CMC) binder or styrene butadiene (SBR) binder or - and preferred - mixtures thereof.

Presently preferred conducting additives are carbon black and/or graphite with carbon black being preferred and combinations of carbon black and graphite being much preferred.

The polymer binders are usually present in amounts of 5 to 40 %, more preferred 10 to 30 % such as 15 to 25%. Electrically conductive additives usually are added in total amounts of 5 to 50 %, preferably 10 to 40 %, more preferred 30 to 40 % and the ratio of carbon black to graphite in general is in the range of 2 : 1 to 0.5 : 1, in particular in the range of about 0.9 : 1 to 1.1 : 1 such as about 1 : 1.

Unless otherwise specified, all percentages and ratios mentioned herein are % by weigt or weight ratios, respectively.

Solvent, in particular water, is preferably added in an amount that dissolves all the polymer binder (s) and provides a viscosity suitable for the coating of a current collector, e.g. with coating line processing.

The anodes of the present invention, in particular according to Ex.1 represent a clear improvement compared to standard commercial graphite anodes. The cycling and charge retention is much better than what has been reported in the prior art (see discussion above).

Moreover, an additional benefit is the use of commercial micro silicon instead of nano-silicon since nano-silicon is expensive and considerably less commercialized.

The AM and such AM comprising anodes of the present invention are suited as electrodes in a variety of batteries, in particular rechargeable batteries, preferably rechargeable batteries of the Li-ion or Na-ion type with Li-ion type batteries being especially preferred.

An alkaline metal ion battery of the present invention comprises a positive electrode (preferably a positive electrode comprising a nanoparticulate alkaline metal intercalating transition metal compound), a negative electrode comprising the AM of the present invention, a separator between the positive electrode and the negative electrode and an electrolyte.

As separator any separator known for use in alkaline metal-ion batteries is suitable.

Besides of the AM a preferred anode comprises a polymer binder and electrically conductive components as described above, in particular an electrode as described above.

Preferred cathodes comprise e.g. nanoparticulate transition metal oxides or nitrides or oxynitrides or phosphates or borates or glasses that are able to intercalate alkaline metal ions. Such electroactive cathode materials may comprise graphene layers and can be formed into cathodes using electrically conductive additives and polymer binder(s) similar to those described above for the inventive anodes. Such electroactive cathode materials, methods for obtaining them and cathodes as well as methods for improving the cathodes are e.g. disclosed in former applications like WO2013132023, EP2607319, EP2544281, WO2011128343, EP2378596, EP2287946, EP2629354, EP2698854.

Suitable electrolytes are alkaline metal ion comprising non-aqueous solutions. Suitable lithium salts are commercially available and comprise lithium hexafluorophosphate, lithium tetrafluoroborate, lithium iodide etc. and suitable solvents are e.g. acetonitrile, diethyl carbonate, dimethyl carbonate, ethyl acetate, ethylene carbonate, ethyl methyl carbonate, propylene carbonate, tetrahydrofuran and mixtures thereof.

A preferred alkaline metal ion is Li-ion.

### Brief Description of the Drawings

The invention will be better understood and objects other than those set forth above will become apparent when consideration is given to the following detailed description thereof. This description makes reference to the annexed drawings, wherein:

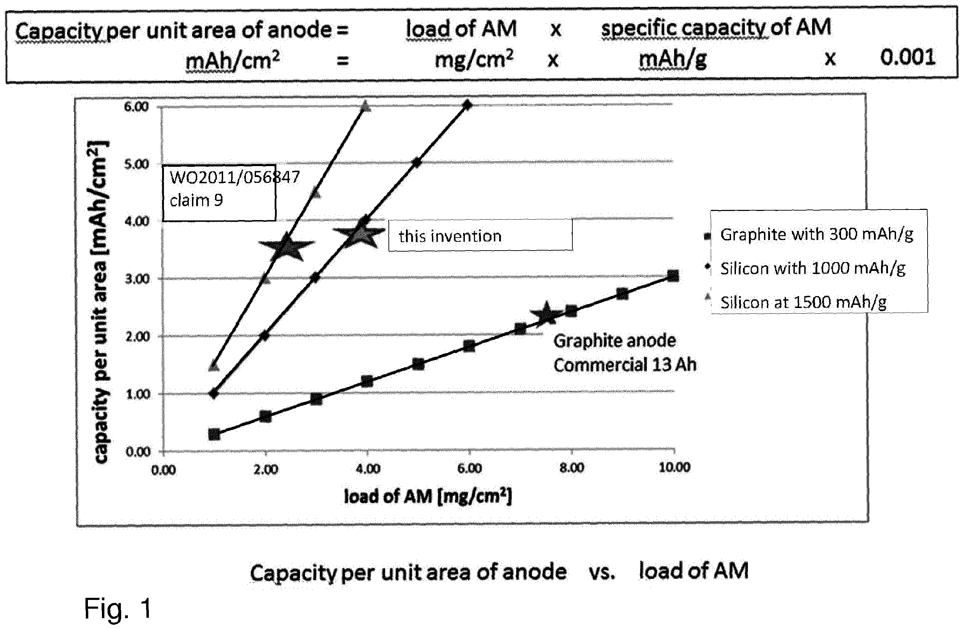

Fig 1 is a comparison of the capacity per unit area vs. load of active material for commercial graphite anodes, silicon anodes according to WO 2011/056847 and silicon anodes of the present invention.

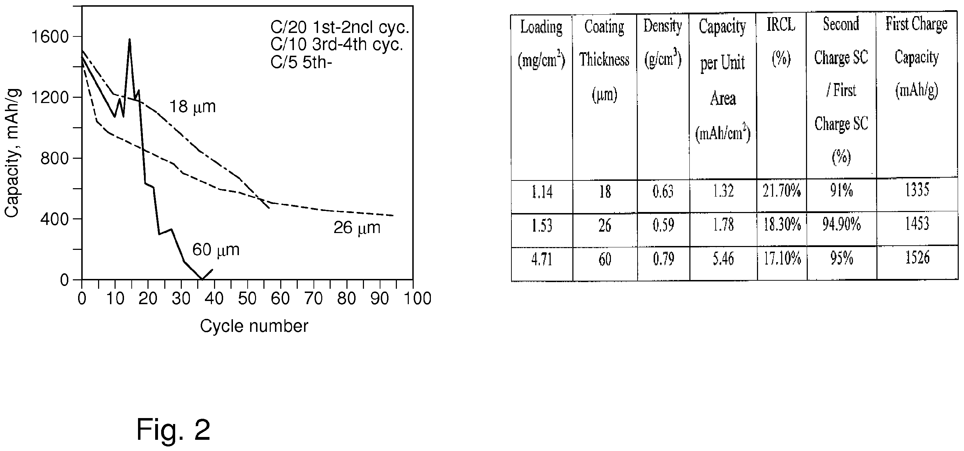

Fig.2 shows low capacity retention of silicon anodes with different thickness according to WO 2011/056847.
Fig.3 shows the capacity during charging/discharging cycles for three electrodes according to the present invention prepared from Si/C composite according to Table 1. Galvanostatic testing between 0.05 and 1.5 V vs Li at C/7.5 rate.
Figure 4: TOP) Size distribution histogram and average diameters for a typical Si/C composite synthesized as described in the experimental part. Bottom left) Scanning electronic microscope image of Si/C composite particle. Bottom right) Cross sectional scanning electronic microscope image of Si/C film casted on copper foil with the anode composition described in Ex.3.
Figure 5: SEM image of PVC used for the following Examples.
Figure 6 shows the temperature profile of the oven during thermal pyrolysis used for the Si/C composite synthesis described in the experimental part.
Figure 7 shows the capacity during charging/discharging cycles for a state of the art silicon mesh electrodes between 0.05 and 1.5 V vs. Li at C/7.5 rate.

### Modes for Carrying Out the Invention

### Experimental part

### A) Material preparation

The carbon/silicon composite, the active material (AM), was prepared in two steps. Firstly micro size commercial silicon powder was annealed with a polymer (carbon source) and the polymer subsequently pyrolyzed to form pyrolyzed polymer coated silicon. Secondly, a ball milling step was performed to achieve silicon composite particles with a desired size distribution and carbonaceous flakes . The morphology of the powders was inspected by scanning electron microscopy (SEM) and the size distribution with a Cilas 990 Laser Particle Size Analyser. Organic analysis was performed using a LECO C/H/N Analyser.

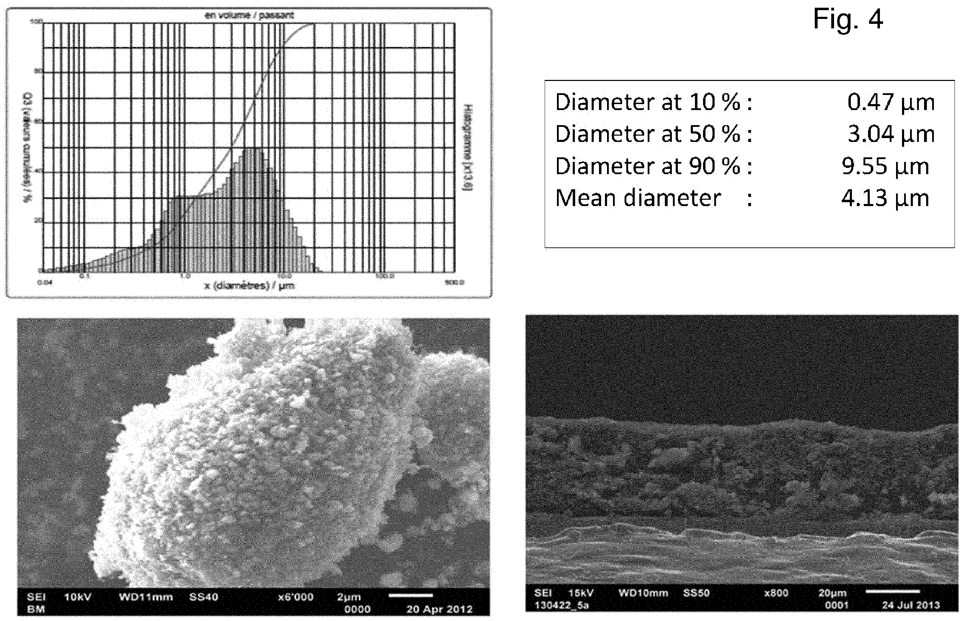

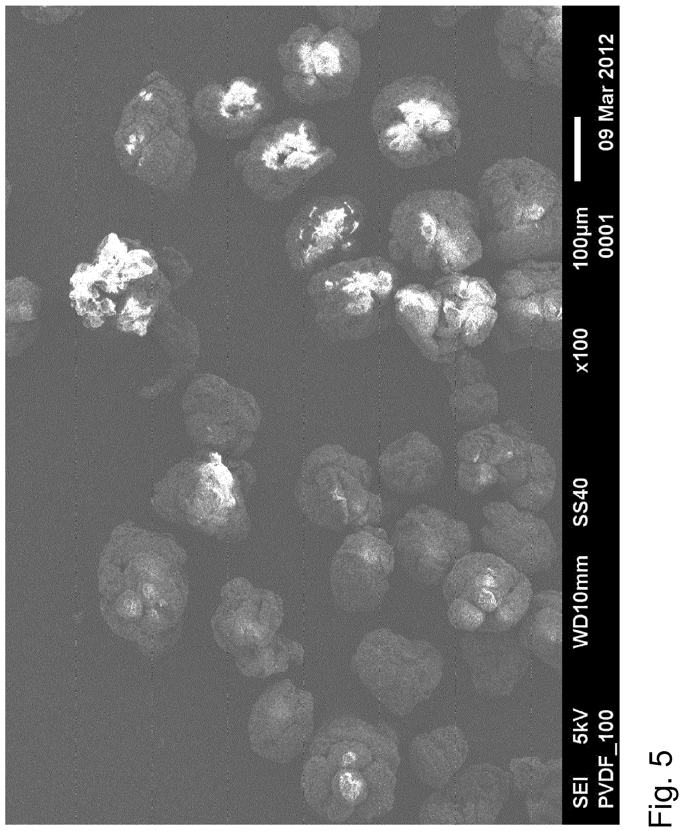

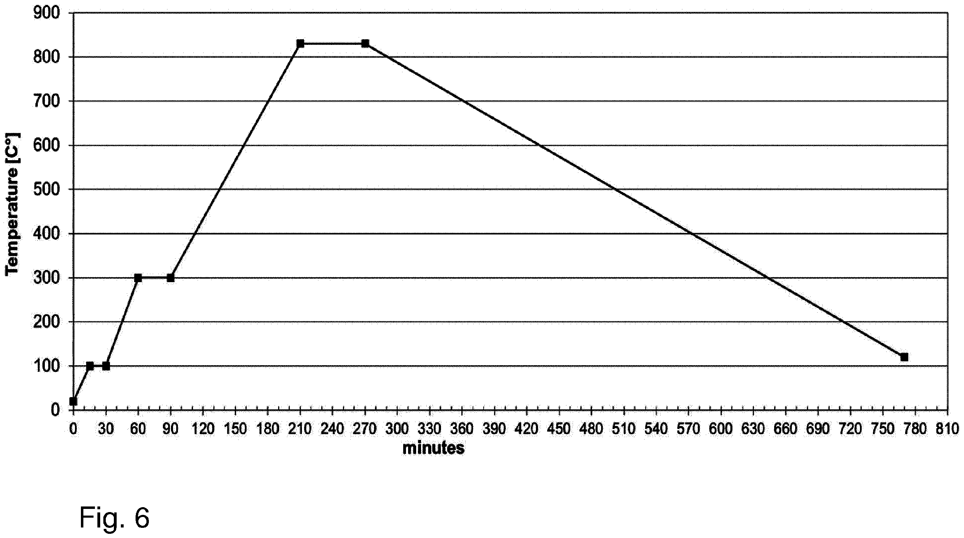

In a typical silicon/carbon AM synthesis, poly(vinyl chloride) (PVC, Aldrich, Fig. 5) and silicon particles 10-40µm (Aldrich, 325 Mesh) were homogeneously mixed (w/w silicon to PVC 3:7), transferred into an oven and purged with an argon flow (this flow was maintained until the product had cooled to less than about 150°C), heated to about 830°C (following the thermal program described in Fig. 6) in an argon atmosphere for 1 h to achieve the pyrolysis of PVC. The heating up to about 830°C was performed at a speed allowing the PVC to anneal and to form a coating on the silicon particles prior to pyrolysis. The pyrolized products were milled using a high energy ball mill in a sealed bowl in argon (Ar) at a rotational speed of 1000 rpm for 20 min. and temperature control set to about 25°C. The weight ratio balls/powder was 20:1. The final powder was composed of micro oval-shaped silicon particles covered by smaller carbon fragments from the PVC decomposition. Typically, the total C in the composition was around 25%. Usually less than 1% H or Cl was present in the SiC composite. The size and composition of the composite can vary depending on the initial ratio used and the milling conditions. A size distribution histogram and average diameters for a typical Si/C composite synthesized as described here is shown in Figure 4, top. A scanning electronic microscope image of Si/C composite particles obtained as described here is shown in Figure 4, bottom left.

Below three examples of silicon anodes are shown that were prepared with the above described composite that had a size average of 4.13 µm and a d_{50%} of 3.04 µm.

### B) Slurries formulation (AM + additives) and electrodes preparation.

The electrode was prepared with AM in amounts of 40-50%, polymer binder, in the present examples a carbon methyl cellulose binder (CMC) in amounts of 3-25% and/or a styrene butadiene (SBR) binder in similar amounts, electrically conductive additives, in the examples and preferred carbon black, in amounts of 5-40% (Super P© Li Timcal) and graphite, in amounts of 0-40% (SLP50© Timcal). Table 1 shows the details of the compositions of the three examples. The AM and additives were homogeneously mixed in water, and the slurry was cast onto an 11 µm Cu foil. The electrode was further dried at 90°C under vacuum for 12 h. After drying the electrodes, coins of 1.54 cm², were punched and used for electrochemical testing.

The cast was done using a "doctor-blading" coating device that allows to apply different layer thicknesses (see Ex. 2 and 3 that were produced in different thicknesses and loads using very similar compositions).A cross sectional scanning electronic microscope image of a Si/C film casted on copper foil with the anode composition described in Ex.3 is shown in Figure 4, bottom right.

**Table 1: Three examples of electrodes with the following specification were prepared using the same Si/C composite as described above.**

| | AM [%] | Additives | | Binders | | | | | | |
|---|---|---|---|---|---|---|---|---|---|---|
| | | Super P [%] | SLP50 [%] | CMC 15MHC [%] | SBR [%] | AM: (super P + SLP50) | Thickness of coin [µm] | Load AM [mg/cm²] | Density [g/cm³] | Capacity* |
| Example 1 | 49.19 | 20.59 | 20.56 | 7.49 | 2.18 | 1.20 | 93 | 3.83 | 0.84 | 3.83 |
| Example 2 | 44.80 | 37.38 | 0 | 14.86 | 2.96 | 1.20 | 90 | 1.96 | 0.49 | 2.67 |
| Example 3 | 45.25 | 37.70 | 0 | 14.95 | 2.11 | 1.20 | 44 | 1.34 | 0.67 | 1.68 |

| | | | | | | | | | | |
|---|---|---|---|---|---|---|---|---|---|---|
| * Capacity per unit area [mAh/cm²] maintained for more than 50 cycles | | | | | | | | | | |

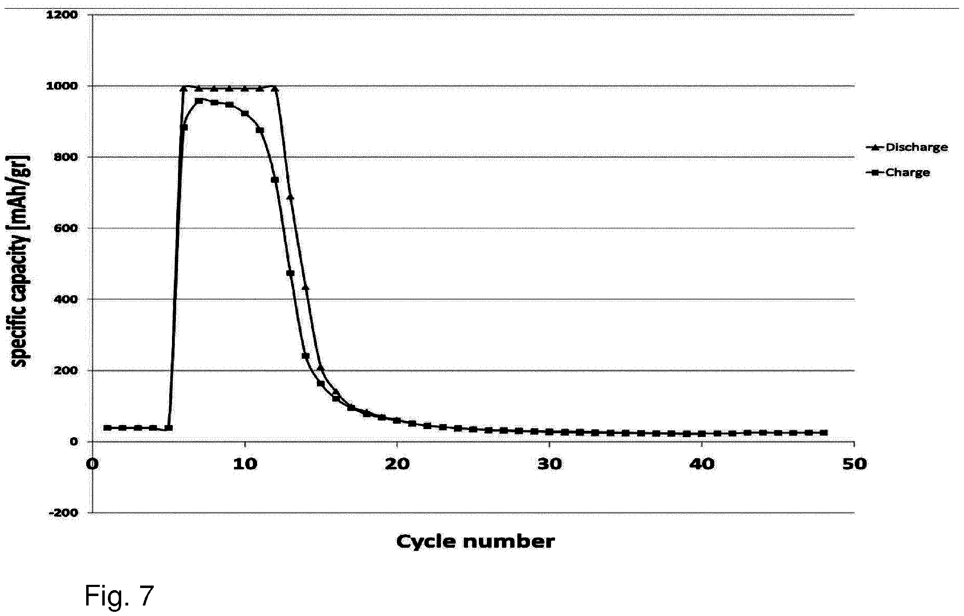

As reference electrode a silicon mesh electrode was produced similar to the electrode of example 1. The capacity of such Si electrode during charging/discharging cycles between 0.05 and 1.5 V vs Li at C/7.5 rate is shown in Figure 7.

### C) Electrochemical testing.

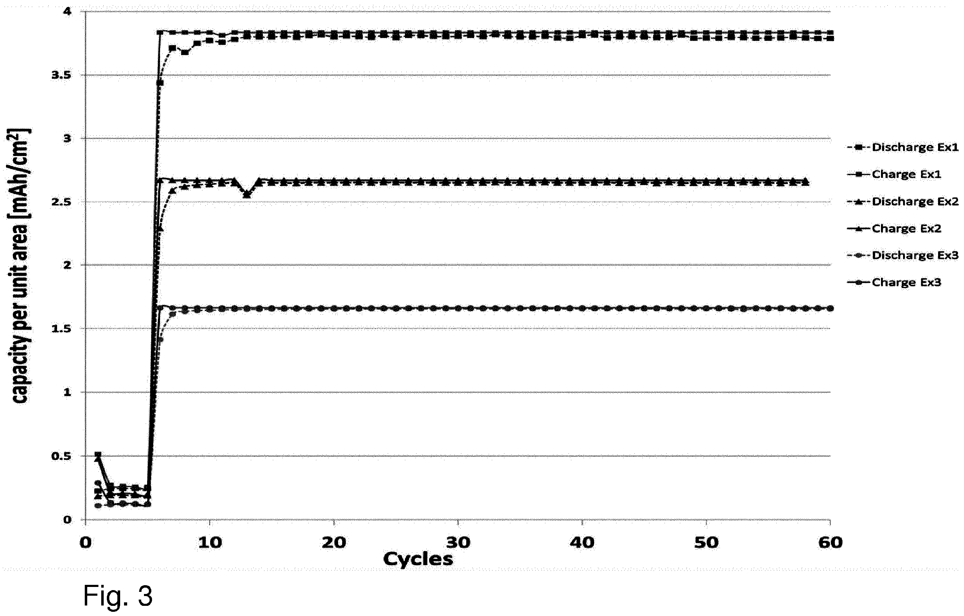

Electrochemical testing was performed with standard CR2025 coin-cell technology. Cells were assembled in an inert argon-filled glove box and cycled at room temperature using Li-metal foil pressed onto a stainless steel disk as counter electrode. The Si/C and Li electrodes were separated by a commercial polypropylene disk (Celgard 2400). The electrolyte was a commercial carbonate mixture solution (Novolyte SSDE-R-21). Cells were operating in galvanostatic mode between 0.05 and 1.5 V vs Li at a C/7.5 rate. The results are shown in Figure 3 and the behaviour of a not pyrolysis treated Si electrode is shown in Figure 7.

### Discussion and Results:

From the three representative examples of silicon anodes prepared with the same active AM and having a ratio between the AM and the additives of 1.2, the electrode composition was the same for Ex.2 and Ex.3 (both containing carbon black (Super P) but no graphite (SLP50)) but differed from the composition of Ex.1 in that Ex. 1 contained carbon black (Super P) and graphite (SLP50). The addition of SLP50 allowed to increase the load of AM without compromising the mechanical stability of the anode. As a consequence, the composition of Ex.1 resulted in a capacity per unit area of 3.83 mAh/cm² that was retained for at least 50 cycles. The anode of Example 2 resulted in a capacity per unit area in the range of a commercial graphite anode. The anode of Example 3 differed from the one of Example 2 in half the thickness but higher density using the same slurry due to the difference in applied thickness.

The capacity during charging/discharge cycles for the three electrodes prepared from Si/C composite according to Table 1 is shown in Figure 3. The electrochemical behavior of the anode of Ex.1 represents a clear improvement compared to standard commercial graphite anodes and to the anodes according to WO 2011/056847 as well as to the reference Si anode with same electrode composition as the one of Example 1 but without pyrolysis treatment (see Figure 7).

While there are shown and described presently preferred embodiments of the invention, it is to be distinctly understood that the invention is not limited thereto but may be otherwise variously embodied and practiced within the scope of the following claims.

## Claims

1. A method for producing a silicon carbon composite electroactive anode material (AM) capable to alloy comprising
mixing micro sized silicon powder with micro sized organic polymer powder to produce a silicon-polymer-mixture,
heating the silicon-polymer mixture in inert gas to pyrolysis temperature and keeping it there for a time sufficiently long to pyrolyze the organic polymer and to form a pyrolyzed polymer coated silicon,
milling said pyrolyzed polymer coated silicon in inert gas to form the silicon carbon composite electroactive anode material (AM).

2. The method of claim 1, wherein the micro sized silicon powder has a particle size in the range of 5 to 80 µm, in general 5 to 50 µm, preferably 10 to 40 µm.

3. The method of claim 1 or 2, wherein the micro sized organic polymer powder has a mean particle size that does not exceed 200 µm, preferably does not exceed 100 µm, most preferred at least 90% of the particles have a size not exceeding 100 µm.

4. The method of one of claims 1 to 3, wherein the ratio of silicon to organic polymer is from 1 : 2 to 1 : 3 such as 1 : 2 to 3 : 8 or about 3 : 7.

5. The method of one of claims 1 to 4, wherein the polymer is polyvinylchloride, in particular polyvinylchloride with an average M_{w} of about 43,000 and an average Mₙ of about 22,000.

6. The method of one of claims 1 to 5, wherein the pyrolysis temperature is achieved at a speed of 4 to 7°C/min. and/or wherein the pyrolysis temperature is kept for a time ranging from 0.5 to 2 h.

7. The method of one of claims 1 to 6, wherein the milling step is performed with a high energy ball mill, in particular with a high energy ball mill using a weight ratio balls/powder of 15:1 to 30:1, preferably 20 : 1, at a rotational speed of 800 to 1200 rpm for 15 min. to 4 hours, such as about 1000 rpm for about 20 min., with temperature control set to about 25°C.

8. A silicon carbon composite electroactive anode material, obtainable by the method of one of claims 1 to 7, wherein 10 % of the particles have a diameter of ≤ 1 µm, 50 % of the particles have a diameter of ≤ 5 µm and 90 % of the particles have a diameter of ≤ 15 µm, and wherein said composite has a mean diameter of 3 to 6 µm and said silicon particles are covered by carbonaceous flakes,
preferably a silicon carbon electroactive composite material, wherein 10 % of the particles have a diameter of ≤ 0.6 µm, 50 % of the particles have a diameter of ≤ 4.0 µm, 90 % of the particles have a diameter of ≤ 11.0 µm, and said composite has a mean diameter of 3.5 to 5.0 µm, and wherein said silicon particles are covered by carbonaceous flakes,
more preferred a silicon carbon electroactive composite material, wherein 10 % of the particles have a diameter of 0.45 ± 0.05 µm, 50 % of the particles have a diameter of 3.0 ± 0.2 µm, 90 % of the particles have a diameter of 10.0 ± 0.5 µm, and said composite has a mean diameter of 4.0 to 4.5 µm, and wherein said silicon particles are covered by carbonaceous flakes.

9. A method for producing an anode comprising mixing a silicon carbon composite electroactive anode material of claim 8 with a polymer binder, electrically conductive additives and a solvent, preferably water, to form a slurry, applying this slurry to a current collector and drying.

10. The method of claim 9 wherein the polymer binder is selected from the group consisting of carbon methyl cellulose (CMC) binder or styrene butadiene (SBR) binder or - and preferred - a mixture thereof.

11. The method of claim 9 or 10, wherein the electrically conductive additives are selected from the group consisting of carbon black, graphite or mixtures thereof, in particular carbon black, more preferred a combination of carbon black and graphite.

12. The method of one of claims 9 to 11, wherein the polymer binders are used in amounts of 5 to 40 %, more preferred 10 to 30 % such as 15 to 25% and/or the electrically conductive additives are used in total amounts of 5 to 50 %, preferably 10 to 40 %, more preferred 30 to 40 % and wherein the ratio of carbon black to graphite is in the range of 2 : 1 to 0.5 : 1, in particular in the range of 0.9 : 1 to 1.1 : 1 such as about 1 : 1.

13. An electrode comprising a silicon carbon composite electroactive anode material of claim 8, a polymer binder and electrically conductive additives, in particular an electrode obtainable by the method of one of claims 9 to 12.

14. A rechargeable battery comprising an electrode of claim 13, in particular a Li-ion battery.

## Patentansprüche

1. Verfahren zum Herstellen eines leitfähigen elektroaktiven Siliciumkohlenstoffverbund-Anodenmaterials (AM) umfassend:
Mischen von Siliciumpulver in Mikrogröße mit einem Pulver eines organischen Polymers in Mikrogröße, um ein Silicium-Polymer-Gemisch herzustellen,
Erhitzen des Silicium-Polymer-Gemisches in einem Inertgas auf Pyrolysetemperatur und Halten auf dieser Temperatur über eine ausreichend lange Zeit, um das organische Polymer zu pyrolysieren und um das mit pyrolysiertem Polymer beschichtete Silicium zu bilden,
Mahlen des mit einem pyrolysierten Polymer beschichteten Siliciums in Inertgas, um das elektroaktive Siliciumkohlenstoffverbund-Anodenmaterial (AM) zu bilden.

2. Verfahren nach Anspruch 1, wobei das Siliciumpulver in Mikrogröße eine Partikelgröße im Bereich von 5 bis 80 µm, im Allgemeinen von 5 bis 50 µm und vorzugsweise von 10 bis 40 µm aufweist.

3. Verfahren nach Anspruch 1 oder 2, wobei das Pulver eines organischen Polymers in Mikrogröße eine mittlere Partikelgröße aufweist, die 200 µm nicht überschreitet, vorzugsweise 100 µm nicht überschreitet, und besonders bevorzugt mindestens 90 % der Partikel eine Größe aufweisen, die 100 µm nicht überschreitet.

4. Verfahren nach einem der Ansprüche 1 bis 3, wobei das Verhältnis von Silicium zu dem organischen Polymer im Bereich von 1:2 bis 1:3, wie etwa 1:2 bis 3:8 liegt oder etwa 3:7 beträgt.

5. Verfahren nach einem der Ansprüche 1 bis 4, wobei das Polymer Polyvinylchlorid, insbesondere Polyvinylchlorid mit einem durchschnittlichen Mw von etwa 43000 und einem durchschnittlichen Mₙ von etwa 22000 ist.

6. Verfahren nach einem der Ansprüche 1 bis 5, wobei die Pyrolysetemperatur mit einer Geschwindigkeit von 4 bis 7 °C/Min. erreicht wird und/oder wobei die Pyrolysetemperatur für einen Zeitraum von 0,5 bis 2 Std. gehalten wird.

7. Verfahren nach einem der Ansprüche 1 bis 6, wobei der Mahlschritt mit einer Hochenergie-Kugelmühle ausgeführt wird, insbesondere mit einer Hochenergie-Kugelmühle, die ein Gewichtsverhältnis von Kugeln zu Pulver im Bereich von 15:1 bis 30:1, vorzugsweise 20:1 verwendet, bei einer Drehzahl im Bereich von 800 bis 1200 min⁻¹ für 15 Min. bis 4 Stunden, beispielsweise etwa 1000 min⁻¹ für etwa 20 Min., wobei eine Temperatursteuerung auf etwa 25 °C eingestellt ist.

8. Elektroaktives Siliciumkohlenstoffverbund-Anodenmaterial, erhaltbar durch das Verfahren nach einem der Ansprüche 1 bis 7,
wobei 10 % der Partikel einen Durchmesser von ≤ 1 µm haben, 50 % der Partikel einen Durchmesser von ≤ 5 µm haben und 90 % der Partikel einen Durchmesser von ≤ 15 µm haben, wobei der Verbund einen mittleren Durchmesser im Bereich von 3 bis 6 µm hat und die Siliciumpartikel mit kohlenstoffhaltigen Flocken beschichtet sind,
vorzugsweise ein elektroaktives Siliciumkohlenstoffverbundmaterial, wobei 10 % der Partikel einen Durchmesser von ≤ 0,6 µm haben, 50 % der Partikel einen Durchmesser von ≤ 4,0 µm haben, 90 % der Partikel einen Durchmesser von ≤ 11,0 µm haben und der Verbund einen mittleren Durchmesser im Bereich von 3,5 bis 5,0 µm hat und wobei die Siliciumpartikel mit kohlenstoffhaltigen Flocken beschichtet sind,
besonders bevorzugt ein elektroaktives Siliciumkohlenstoffverbundmaterial, wobei 10 % der Partikel einen Durchmesser von 0,45 ± 0,05 µm haben, 50 % der Partikel einen Durchmesser von 3,0 ± 0,2 µm haben, 90 % der Partikel einen Durchmesser von 10,0 ± 0,5 µm haben und der Verbund einen mittleren Durchmesser im Bereich von 4,0 bis 4,5 µm hat und wobei die Siliciumpartikel mit kohlenstoffhaltigen Flocken beschichtet sind.

9. Verfahren zum Herstellen einer Anode, umfassend das Mischen eines elektroaktiven Siliciumkohlenstoffverbund-Anodenmaterials nach Anspruch 8 mit einem Polymerbindemittel, mit elektrisch leitenden Additiven und mit einem Lösungsmittel, vorzugsweise Wasser, um einen Schlamm zu bilden, das Aufbringen dieses Schlamms auf einen Stromkollektor und das Trocknen.

10. Verfahren nach Anspruch 9, wobei das Polymerbindemittel aus der Gruppe, bestehend aus Kohlenstoff-Methyl-Zellulose (CMC)-Bindemittel oder Styrol-Butadien (SBR)-Bindemittel, oder - vorzugsweise - einem Gemisch hiervon, gewählt ist.

11. Verfahren nach Anspruch 9 oder 10, wobei die elektrisch leitenden Additive aus der Gruppe, bestehend aus Ruß, Graphit oder Gemischen hiervon, insbesondere aus Ruß, besonders bevorzugt aus einer Kombination von Ruß und Graphit gewählt sind.

12. Verfahren nach einem der Ansprüche 9 bis 11, wobei die Polymerbindemittel in Mengen von 5 bis 40 %, besonders bevorzugt von 10 bis 30 %, wie etwa von 15 bis 25 %, verwendet werden und/oder die elektrisch leitenden Additive in Gesamtmengen von 5 bis 50 %, vorzugsweise von 10 bis 40 %, besonders bevorzugt von 30 bis 40 % verwendet werden und wobei das Verhältnis von Ruß zu Graphit im Bereich von 2:1 bis 0,5:1, insbesondere im Bereich von 0,9:1 bis 1,1:1, wie etwa bei 1:1, liegt.

13. Elektrode, umfassend ein elektroaktives Siliciumkohlenstoffverbundmaterial nach Anspruch 8, ein Polymerbindemittel und elektrisch leitende Additive, insbesondere eine durch das Verfahren nach einem der Ansprüche 9 bis 12 erhaltbare Elektrode.

14. Wiederaufladbare Batterie, umfassend eine Elektrode nach Anspruch 13, insbesondere eine Li-lonen-Batterie.

## Revendications

1. Procédé de fabrication d'un matériau d'anode (MA) électroactif composite silicium carbone apte à former un alliage comprenant
mélanger une micro poudre de silicium avec une micro poudre de polymère organique pour produire un mélange silicium-polymère,
chauffer le mélange silicium-polymère dans un gaz inerte à température de pyrolyse et le maintenir ainsi pendant un temps suffisamment long pour pyrolyser le polymère organique et former un silicium revêtu de polymère pyrolysé,
broyer ledit silicium revêtu de polymère pyrolysé dans un gaz inerte pour former le matériau d'anode (MA) électroactif composite silicium carbone.

2. Procédé selon la revendication 1, dans lequel la micro poudre de silicium a une taille de particule de 5 à 80 µm, en général de 5 à 50 µm, de préférence de 10 à 40 µm.

3. Procédé selon la revendication 1 ou 2, dans lequel la micro poudre de polymère organique a une taille de particule moyenne inférieure à 200 µm, de préférence inférieure à 100 µm, plus préférentiellement au moins 90% des particules ont une taille inférieure à 100 µm.

4. Procédé selon l'une des revendications 1 à 3, dans lequel le rapport silicium sur polymère organique est de 1 : 2 à 1 : 3 tel que 1 : 2 à 3 : 8 ou environ 3 : 7.

5. Procédé selon l'une des revendications 1 à 4, dans lequel le polymère est un polychlorure de vinyle, en particulier un polychlorure de vinyle avec une M_{w} moyenne d'environ 43 000 et une Mₙ moyenne d'environ 22 000.

6. Procédé selon l'une des revendications 1 à 5, dans lequel la température de pyrolyse est atteinte avec une vitesse de 4 à 7°C/min. et/ou dans lequel la température de pyrolyse est maintenue pendant une durée de 0.5 à 2 h.

7. Procédé selon l'une des revendications 1 à 6, dans lequel l'étape de broyage est réalisée avec un broyeur à billes à haute énergie, en particulier avec un broyeur à billes à haute énergie utilisant un rapport massique billes/poudre de 15:1 à 30:1, de préférence 20 : 1, à une vitesse rotationnelle de 800 à 1200 tr/m pendant 15 min. à 4 heures, tel qu'environ 1000 tr/m pendant environ 20 min., avec une commande de température réglée à environ 25°C.

8. Matériau d'anode électroactif composite silicium carbone, susceptible d'être obtenu par le procédé selon l'une des revendications 1 à 7, dans lequel 10 % des particules ont un diamètre ≤ 1 µm, 50 % des particules ont un diamètre ≤ 5 µm and 90 % des particules ont un diamètre ≤ 15 µm, et dans lequel le composite a un diamètre moyen de 3 à 6 µm et lesdites particules de silicium sont recouvertes de flocons carbonés,
de préférence un matériau électroactif composite silicium carbone, dans lequel 10 % des particules ont un diamètre ≤ 0.6 µm, 50 % des particules ont un diamètres ≤ 4.0 µm, 90 % des particules ont un diamètre ≤ 11.0 µm, et ledit composite a un diamètre moyen de 3.5 à 5.0 µm, et dans lequel lesdites particules de silicium sont recouvertes de flocons carbonés,
et plus préférentiellement un matériau électroactif composite silicium carbone, dans lequel 10 % des particules ont un diamètre de 0.45 ± 0.05 µm, 50 % des particules ont un diamètre de 3.0 ± 0.2 µm, 90 % of des particules ont un diamètre de 10.0 ± 0.5 µm, et ledit composite a un diamètre moyen de 4.0 à 4.5 µm, et dans lequel lesdites particules de silicium sont recouvertes de flocons carbonés.

9. Procédé de fabrication d'une anode comprenant le mélange d'un matériau d'anode électroactif composite silicium carbone selon la revendication 8 avec un liant polymère, des additifs électriquement conducteurs et un solvant, de préférence de l'eau, pour former une pâte, l'application de cette pâte sur un collecteur de courant et le séchage.

10. Procédé selon la revendication 9 dans lequel le liant polymère est choisi parmi le groupe consistant en un liant carboxy-méthyle cellulose (CMC) ou un liant styrène butadiène (SBR) ou- et de préférence - un mélange de ceux-ci.

11. Procédé selon la revendication 9 ou 10, dans lequel les additifs électriquement conducteurs sont choisis parmi le groupe consistant en noir de carbone, graphite ou leurs mélanges, en particulier un noir de carbone, plus préférentiellement une combinaison de noir de carbone et de graphite.

12. Procédé selon l'une des revendications 9 à 11, dans lequel les liants polymères sont utilisés dans des quantités de 5 à 40 %, plus préférentiellement de 10 à 30 % telles que 15 à 25 % et/ou les additifs électriquement conducteurs sont utilisés en une quantité totale de 5 à 50 %, de préférence 10 à 40 %, plus préférentiellement 30 à 40 % et dans lequel le rapport de noir de carbone sur le graphite est compris entre 2 : 1 à 0.5 : 1, en particulier entre 0.9 : 1 et 1.1 : 1 tel que environ 1 : 1.

13. Electrode comprenant un matériau d'anode électroactif composite silicium carbone selon la revendication 8, un liant polymère et des additifs électriquement conducteurs, en particulier une électrode susceptible d'être obtenue par le procédé selon l'une des revendications 9 à 12.

14. Batterie rechargeable comprenant une électrode selon la revendication 13, en particulier une batterie Li-ion.
